(19) Europäisches Patentamt European Patent Office Office européen des brevets

(11) **EP 4 663 429 A1**

(12) **EUROPEAN PATENT APPLICATION**

(43) Date of publication:
**17.12.2025 Bulletin 2025/51**

(21) Application number: **25178209.0**

(22) Date of filing: **22.05.2025**

(51) International Patent Classification (IPC):
**B60C 1/00** $^{(2006.01)}$   **B60C 13/02** $^{(2006.01)}$

(52) Cooperative Patent Classification (CPC):
**B60C 1/0025; B60C 13/02;** B60C 2001/005;
B60C 2013/006; B60C 2013/007; B60C 2015/0614

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.06.2024 JP 2024093909**

(71) Applicant: **Sumitomo Rubber Industries, Ltd.
Kobe-shi, Hyogo 651-0072 (JP)**

(72) Inventor: **KAWAZU, Akari
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57)     Provided is a tire comprising a pair of sidewalls (2) located in side parts, and a pair of clinch apexes (3) that are located on inner sides of the sidewalls in a radial direction and in contact with a rim,

wherein a rubber composition constituting the clinch apex comprises a recovered carbon black, and has a loss tangent at 70°C, 70°C tan $\delta_C$, of less than 0.25,

wherein a length of a contact portion of the clinch apex and the side wall on a tire meridian cross section including a tire rotation axis is 5 mm or more and 30 mm or less, and

wherein a complex elastic modulus at 70°C of a rubber composition constituting the sidewall, 70°CE$_{*S}$, is 2.0 or more.

FIG.1

**EP 4 663 429 A1**

**Description**

TECHNICAL FIELD

The present invention relates to a tire.

BACKGROUND OF THE INVENTION

In response to a demand for life prolongation of a tire, life prolongation of each of members constituting a tire has been considered. JP 2023-60806 A describes an improvement in crack resistance in consideration of a total styrene amount in a rubber component constituting a clinch apex and a thickness.

SUMMARY OF THE INVENTION

It is an object of the present invention to provide a tire that improves in overall performance of fuel efficiency and crack resistance.
The present invention relates to a tire below:

A tire comprising a pair of sidewalls located in side parts, and a pair of clinch apexes that are located on inner sides of the sidewalls in a radial direction and in contact with a rim,
wherein a rubber composition constituting the clinch apex comprises a recovered carbon black, and has a loss tangent at 70°C, 70°C tan $\delta_C$, of less than 0.25,
wherein a length of a contact portion of the clinch apex and the side wall on a tire meridian cross section including a tire rotation axis is 5 mm or more and 30 mm or less, and
wherein a complex elastic modulus at 70°C, in MPa, of a rubber composition constituting the sidewall, $70°CE^*_S$, is 2.0 or more.

According to the present invention, a tire having improved overall performance of fuel efficiency and crack resistance can be provided.

BRIEF DESCRIPTION OF THE DRAWINGS

FIG. 1 is a schematic view showing a part of a cross section of a tire relating to one embodiment of the present invention taken along a tire meridian line (the upper right-side part of the cross section).
FIG. 2 is a schematic view of an outer surface of a sidewall on which a plurality of columnar minute protrusions are formed.
FIG. 3 is a schematic view of an outer surface of a sidewall on which a plurality of quadrangular truncated conical shaped minute protrusions are formed.
FIG. 4 is an X-X cross-sectional view of FIG. 3.
FIG. 5 is a schematic view of an outer surface of a sidewall on which a plurality of rib shaped minute protrusions are formed.
FIG. 6 is a Y-Y cross-sectional view of FIG. 5.

DETAILED DESCRIPTION

The tire relating to one embodiment of the present invention is a tire comprising a pair of sidewalls located in side parts, and a pair of clinch apexes that are located on inner sides of the sidewalls in a radial direction and in contact with a rim, wherein a rubber composition constituting the clinch apex comprises a recovered carbon black, and has a loss tangent at 70°C (70°C tan $\delta_C$) of less than 0.25, wherein a length, in mm, of a contact portion of the clinch apex and the sidewall on a tire meridian cross section including a tire rotation axis is 5 or more and 30 or less, and wherein a complex elastic modulus at 70°C, in MPa, of a rubber composition constituting the sidewall ($70°CE^*_S$) is 2 or more.
Although it is not intended to be bound by a theory, a reason why the overall performance of fuel efficiency and crack resistance can be improved in embodiments of the present invention is considered as follows. That is, (1) when 70°C tan $\delta$ of the clinch apex is less than a predetermined value, it is considered that fuel efficiency is ensured. Moreover, (2) when the complex elastic modulus E* of the sidewall rubber is equal to or greater than a predetermined value, a difference in rigidity between the sidewall and the clinch apex is reduced, and a difference in strain during running is also reduced, so that it is considered that energy loss is less likely to occur. Additionally, (3) when the length of the contact portion of the sidewall and the clinch apex is equal to or less than a predetermined value, strain occurring in a tire during running is dispersed, so that it is considered that crack can be suppressed. Then, with cooperation of the above-described (1) to (3), it is considered that a remarkable effect of improving the overall performance of fuel efficiency and crack resistance can be obtained.

The length of the contact portion of the clinch apex and the sidewall is preferably 10 mm or more and 20 mm or less.

A contact area between the sidewall and the clinch apex can be secured, whereby strain occurring in a tire during running is dispersed, which is considered to enable suppression of crack.

The 70°C tan $\delta_C$ is preferably less than 0.20.

When the loss tangent is such a value, it is considered that fuel efficiency is further enhanced.

The 70°CE*$_S$, in MPa, is preferably 3.0 or more, more preferably 4.5 or more.

When the complex elastic modulus E*$_S$ is equal to or greater than such a predetermined value, it is considered that a difference in rigidity between the sidewalls and the clinch apexes and a difference in strain during running are strongly reduced.

It is preferable that the 70°C tan $\delta_C$ is 0.10 or less and the 70°CE*$_S$, in MPa, is 5.0 or more.

In such a tire, there is no difference in rigidity between a clinch apex and a sidewall, and strain can be reduced, which is considered to improve fuel efficiency.

A content of the recovered carbon black is preferably less than 20 parts by mass based on 100 parts by mass of the rubber component.

A recovered carbon black can be obtained by pyrolyzing a waste tire or the like, and its surface is subjected to an incineration process. When the recovered carbon black is compounded in a rubber composition, a bond of the recovered carbon black to a surrounding rubber polymer weakens as compared with other carbon black and the like, so that it is considered that elongation of the rubber composition comprising the recovered carbon black is improved and its flexibility is increased. Therefore, the above-described rubber composition can flexibly respond to deformation of a tire during running, which is considered to improve crack resistance.

It is preferable that the rubber composition constituting the clinch apex comprises a rubber component comprising greater than 20% by mass of an isoprene-based rubber and that, when a content of the isoprene-based rubber in the rubber component is less than 100% by mass, the rubber component comprises at least one of a butadiene rubber and a styrene-butadiene rubber.

It is considered that such a tire can suppress flex crack growth.

The rubber composition constituting the sidewall preferably comprises greater than 40% by mass of a butadiene rubber.

It is considered that such a tire can suppress flex crack growth.

The sidewall preferably has a minute protrusion-forming part in which a plurality of minute protrusions are formed on the outer surface of the sidewall.

When the sidewall has the minute protrusion-forming part, stress concentration on the outer surface of the sidewall can be suppressed, which is considered to contribute to improvement of crack resistance.

A shape of each minute protrusion preferably has a columnar, conical, or rib shape.

When the minute protrusions have these predetermined shapes, stress concentration on the outer surface of the sidewall can be suppressed, which is considered to contribute to an improvement of crack resistance.

It is preferable that a height of each minute protrusion is 0.03 mm or more and 0.50 mm or less, that twenty or more minute protrusions are formed at intervals of 0.50 mm or less in at least one direction, and that the minute protrusion-forming part has an area of 10 mm$^2$ or more.

When the dimensions of the minute protrusions are within these predetermined ranges, stress concentration on the outer surface of the sidewall can be suppressed, which is considered to contribute to an improvement of crack resistance.

A maximum width of each of the minute protrusions is preferably 0.03 mm or more and 5.0 mm or less.

When the maximum width of each of the minute protrusions is within a predetermined range, stress concentration on the outer surface of the sidewall can be suppressed, which is considered to contribute to improvement of crack resistance.

It is preferable that heights of the minute protrusions are gradually increased from a tire maximum width position outward in a tire radial direction and are gradually increased from the tire maximum width position inward in the tire radial direction.

Relatively large strain occurs in the vicinity of the tire maximum width position of each sidewall, but, when the minute protrusions are formed such that, the nearer to the tire maximum width position the minute protrusion is, the more the height of the minute protrusion is decreased, non-uniformity of a rubber content in a tire circumferential direction at a position where large strain occurs is reduced, thereby avoiding stress concentration in the vicinity of the minute protrusion, which is considered to contribute to improvement of crack resistance.

When a thickness, in mm, of the sidewall is referred to as T, T and 70°C tan $\delta_C$ of the clinch apex preferably satisfy relationship of the inequality (1),

$$(1)\ T \times 70°C\ \tan \delta_C < 0.80.$$

It is considered that such a tire is a tire with excellent fuel efficiency.

When a content, in parts by mass, of carbon black in each sidewall is referred to W and a length, in mm, of a contact portion of the clinch apex and the sidewall is referred to L, W, L, and 70°C tan $\delta_C$ preferably satisfy relationship of the inequality (2),

$$(2)\ W \times L\ /\ 70°C\ \tan \delta_C > 5000.$$

Since strain is less likely to accumulate between the sidewall and the clinch apex in such a tire, it is considered that such a tire is a tire with excellent fuel efficiency.

<Definition>

A "standardized state" means a state where a tire is rim-assembled to a standardized rim, filled with air at a standardized internal pressure, and applied with no load.

A dimension of each part of a tire is, for one appearing on the outer surface of the tire, a value specified in a standardized state, unless otherwise specified, while it is, for one present inside the tire or on a tire cutting surface a value specified, for example, in a condition where the tire is cut on a plane including a tire rotation axis and the cut tire piece is held to a rim width of a standardized rim.

A "tire weight" refers to a weight of a single tire excluding a weight of a rim. On the other hand, in a case where a member consisting of a sponge and a sealant, a sensor member, or the like is provided in a tire lumen, the tire weight shall be a weight including a weight of such a member.

A "standardized rim" is a rim, in a standard system including a standard on which the tire is based, defined by the standard for each tire. For example, the "standardized rim" refers to a standard rim of an applicable size described in "Jatma Year Book" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, if the tire is not defined in the above-described standard system, the "standardized rim" refers to a rim having the narrowest rim width among rims that can be rim-assembled to the tire and retain internal pressure (that is, do not cause air leakage between the rim and the tire) and each of which has the smallest diameter.

A "standardized internal pressure" is an air pressure, in a standard system including a standard on which the tire is based, defined by the standard for each tire and refers to, for example, a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity $W_L$" is calculated by the following equation. "V" represents a virtual volume, in mm³, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as the above-described standardized load.

$$W_L = 0.000011 \times V + 175$$

$$V = \{(Dt/2)^2 - (Dt/2 - Ht)^2\} \times \pi \times Wt$$

A "recovered carbon black" refers to carbon black that is obtained by a pyrolysis process of a product comprising carbon black such as a used tire and the like, in which a ratio of a mass of ash (ash content), which is a component that does not combust, is 13% by mass or more when the product is subjected to oxidative combustion by heating in the air, using a thermal weight measurement method according to JIS K 6226-2:2003. That is, a mass (carbon amount) of a weight loss content due to oxidative combustion is 87% by mass or less. The recovered carbon black is also referred to as "recycled carbon" or "recycled carbon black" and may be expressed by rCB.

A "thickness (T) of a sidewall" is a thickness, in a tire width direction, of a rubber layer constituting a sidewall at a position at which a distance of an outer surface of the sidewalls in the tire width direction becomes the longest on a tire cross section along a plane including a tire rotation axis. For a "thickness of a sidewall", an average value of values measured at five sites where a tire is rotated in 72 degree increments is used. Besides, the measurement can be performed by preparing a cross-sectional piece of the tire cut along the plane including the tire rotation axis and holding it with a space between its beads adjusted to match a width of a standardized rim.

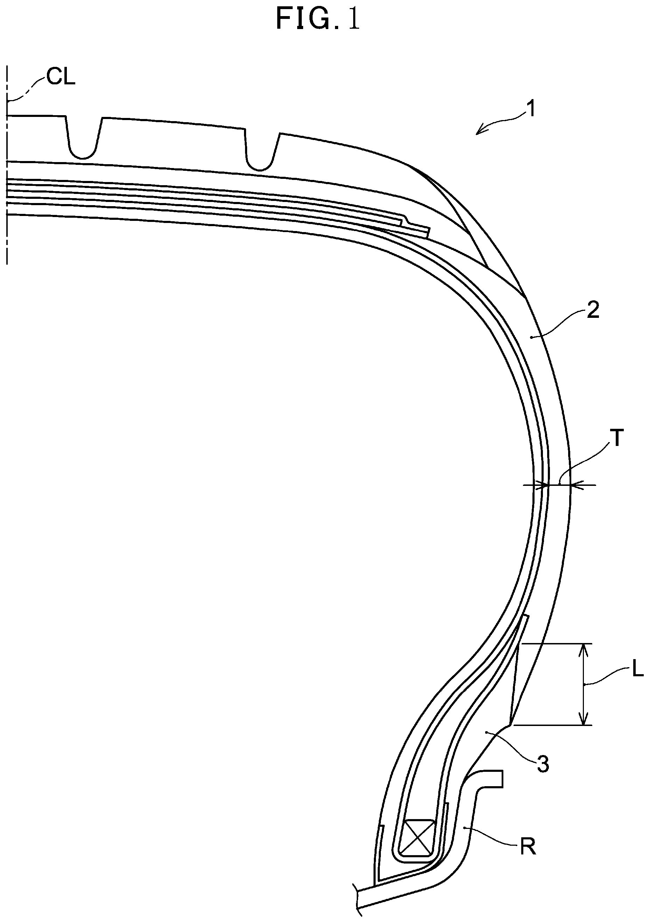

A "length of a contact portion of a clinch apex and a sidewall" is a length of an interface between the clinch apex and the sidewall, which is measured in a state where a tire cut along a plane including a tire rotation axis is held by a standardized rim. For example, such a length corresponds to L shown in FIG. 1.

A "minute protrusion" refers to a convex bulge formed on an outer surface of a sidewall and having a height of 0.03 mm or more and 0.50 mm or less. A maximum width of each of the minute protrusions is preferably 0.03 mm or more and 5.0 mm or less.

A "protrusion-forming part" refers to a part on an outer surface of a sidewall, on which the above-described minute protrusions are formed.

"A loss tangent and a complex elastic modulus of a rubber composition" are a loss tangent (tan δ) and a complex elastic modulus E*, in MPa, that are measured with an extension mode, using a dynamic viscoelasticity measuring device (for example, EPLEXOR series manufactured by gabo Systemtechnik GmbH), under each condition. A sample used for dynamic viscoelasticity measurement is a vulcanized rubber composition having a length of 20 mm, a width of 4 mm, and a thickness of 1 mm. When a sample is prepared by being cut out from a tire, a length direction of the sample is made to match a tangential direction relative to the circumference of the tire, and a thickness direction of the sample is made to match a tire width direction.

"70°C tan δ" and "70°C E*" are a loss tangent (tan δ) and a complex elastic modulus E*, in MPa, respectively, that are measured under a condition of a temperature at 70°C, a frequency of 10 Hz, an initial strain of 10%, a dynamic strain of ±1%, and an extension mode.

<Measuring method>

A "styrene content" is calculated by pyrolysis gas chromatography or NMR measurement ($^1$H-NMR or $^{13}$C-NMR). For an ingredient amount such as a "styrene content", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also, for a "vinyl content", there is a true value that does not depend on any measuring methods, like a "styrene content". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also, for a "cis content", there is a true value that does not depend on any measuring methods, like a "styrene content". Therefore, it is preferable to use a measuring method that is as highly accurate as possible.

An "ash content of carbon black" and an "ash content of a recovered carbon black" are measured by a thermal weight measurement method of JIS K 6226-2:2003.

A "$N_2SA$ of carbon black" and a "$N_2SA$ of recovered carbon black" are values calculated according to JIS K 6217-2:2017.

An "average primary particle size of carbon black" and an "average primary particle size of a recovered carbon black" are values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4\times$(area of particle)/$\pi$") calculated from a microscope image is defined as a particle size.

A "$N_2SA$ of silica" is a value measured by a BET method according to ASTM D3037-93.

<Tire>

The tire relating to one embodiment of the present invention will be described below with reference to the drawings as appropriate. However, the drawings are merely examples for explanation.

FIG. 1 is a schematic view showing a part of a cross section of the tire relating to one embodiment of the present invention taken along a tire meridian line (the upper right-side part of the cross section). In Fig. 1, a tire 1 comprises a pair of sidewalls 2 arranged on both sides thereof, and clinch apexes 3 arranged on inner-side ends of the sidewalls in a tire radial direction. A length of a contact portion of a sidewall and a clinch apex is denoted by L, and a thickness of the sidewall is denoted by T.

70°C tan $\delta_C$ of a rubber composition for a clinch apex is less than 0.25, preferably less than 0.20, more preferably less than 0.15, further preferably 0.10 or less, further preferably less than 0.10, further preferably 0.07 or less.

70°C tan $\delta_C$ can be appropriately adjusted depending on types or compounding amounts of components constituting a rubber composition which will be described below. For example, 70°C tan $\delta_C$ tends to be able to be increased by increasing an amount of a filler, reducing its particle size, decreasing amounts of a vulcanizing agent and a vulcanization accelerator, or the like, and 70°C tan $\delta_C$ tends to be able to be decreased by reverse operations.

70°C$E^*_S$ of a rubber composition for a sidewall is 2.0 or more, preferably 4.5 or more, more preferably 5.0 or more, further preferably 6.0 or more.

70°C$E^*_S$ can be appropriately adjusted depending on types or compounding amounts of components constituting a rubber composition which will be described below. For example, 70°C$E^*_S$ tends to be able to be increased by increasing an amount of a filler, reducing its particle size, decreasing a total amount of plasticizing agents, or increasing amounts of a vulcanizing agent and a vulcanization accelerator. Moreover, 70°C$E^*_S$ tends to be able to be decreased by reverse operations.

A length L, in mm, of a contact portion of the clinch apex and the sidewall on a tire meridian cross section including a tire rotation axis is 5 mm or more and 30 mm or less. It is preferably 8 mm or more, more preferably 10 mm or more, further preferably 12 mm or more. Moreover, it is preferably 25 mm or less, more preferably 20 mm or less.

(Inequality (1))

The relationship satisfied by the inequality (1) is as follows,

$$(1)\ T \times 70°C \tan \delta_C < 0.80.$$

The right side in the inequality (1) is preferably 0.75, more preferably 0.70, further preferably 0.65, further preferably 0.60, further preferably 0.55.

A value on the left side in the inequality (1) can be decreased by thinning a thickness of a sidewall or decreasing 70°C tan $\delta_C$, or can also be increased by reverse operations. A value of 70°C tan $\delta_C$ can be adjusted as described above. Moreover, a thickness T, in mm, of a sidewall is not particularly limited as long as it is in a range of thicknesses that can be usually adopted. For example, in a case of a tire for a passenger car, T is larger than 1.5 mm, preferably larger than 2.0 mm, more preferably larger than 2.3 mm, further preferably larger than 2.5 mm. On the other hand, for example, T is smaller than 10.0 mm, preferably smaller than 9.0 mm, more preferably smaller than 8.0 mm, further preferably smaller than 7.0 mm.

(Inequality (2))

The relationship satisfied by the inequality (2) is as follows,

$$(2)\ W \times L\ /\ 70°C \tan \delta_C > 5000.$$

The right side in the inequality (2) is preferably 5200, more preferably 5400, further preferably 5600, further preferably 6000, further preferably 10000.

A content W of carbon black in the rubber composition for a sidewall is, for example, greater than 30 parts by mass, preferably greater than 40 parts by mass, more preferably 50 parts by mass or more, further preferably 60 parts by mass or more, based on 100 parts by mass of the rubber component. On the other hand, it is preferably less than 150 parts by mass, more preferably less than 110 parts by mass, further preferably less than 80 parts by mass.

For example, a value on the left side in the inequality (2) can be decreased by decreasing a content of carbon black in the rubber composition for a sidewall, decreasing a length of a contact portion of a sidewall and a clinch apex, or increasing 70°C tan $\delta_C$, or the value on the left side in the inequality (2) can also be increased by reverse operations. Adjustment of a value of 70°C tan $\delta_C$ is as mentioned above.

(Minute protrusion-forming part)

The tire of the present invention preferably comprises a minute protrusion-forming part in which a plurality of minute protrusions are formed on an outer surface of at least one of the pair of the sidewalls.

In the minute protrusion-forming part, the minute protrusions may be arranged in one line or in multiple lines in the tire radial direction. Here, the term "arranged in one line in the tire radial direction" means that the number of lines in which the minute protrusions are arranged in the tire radial direction is less than 2. Moreover, the minute protrusions may be arranged in one line or in multiple lines in the tire circumferential direction. Here, the term "arranged in one line in the tire circumferential direction" means that the number of lines in which the minute protrusions are arranged in the tire circumferential direction is less than 2. The minute protrusions are preferably provided to be arranged in multiple lines in the tire radial direction and arranged in multiple lines in the tire circumferential direction.

An "area of a protrusion-forming part" refers to an area defined by a line surrounding the outermost part among a plurality of minute protrusions arranged at intervals of 0.50 mm or less when viewed in a direction perpendicular to a surface of a tire. The area of the minute protrusion-forming part is preferably 10 mm$^2$ or more. This is because stress concentration on the outer surface of the sidewall is suppressed and such an area can contribute to improvement of crack resistance of the sidewall. Moreover, in the protrusion-forming part, a cluster of minute protrusions may be continuous or may be divided. Here, the term "divided" means that intervals between minute protrusions are greater than 1.0 mm. Accordingly, at least one minute protrusion-forming part or a plurality of minute protrusion-forming parts may be present on an outer surface of at least one of the pair of the sidewalls.

(Minute protrusion)

A shape of each minute protrusion is not particularly limited as long as it suppresses stress concentration on an outer surface of a sidewall and contributes to improvement of crack resistance of the sidewall, and specific examples of such a shape include a columnar shape, a conical shape, a rib shape (a muscle shape), and the like. Examples of the columnar shape include a cylindrical shape as well as polygonal columnar shapes such as a triangular columnar shape, a quadrangular columnar shape, a pentagonal columnar shape, and the like. Examples of the conical shape include a truncated conical shape as well as polygonal truncated conical shapes such as a triangular truncated conical shape, a quadrangular truncated conical shape, a pentagonal truncated conical shape, and the like. Regarding the rib shape, a shape of a cross section of a rib shaped minute protrusion perpendicular to its longitudinal direction is not particularly limited, and may include any rib shapes. Examples of such a shape of the cross section include, for example, a rectangle or a trapezoid.

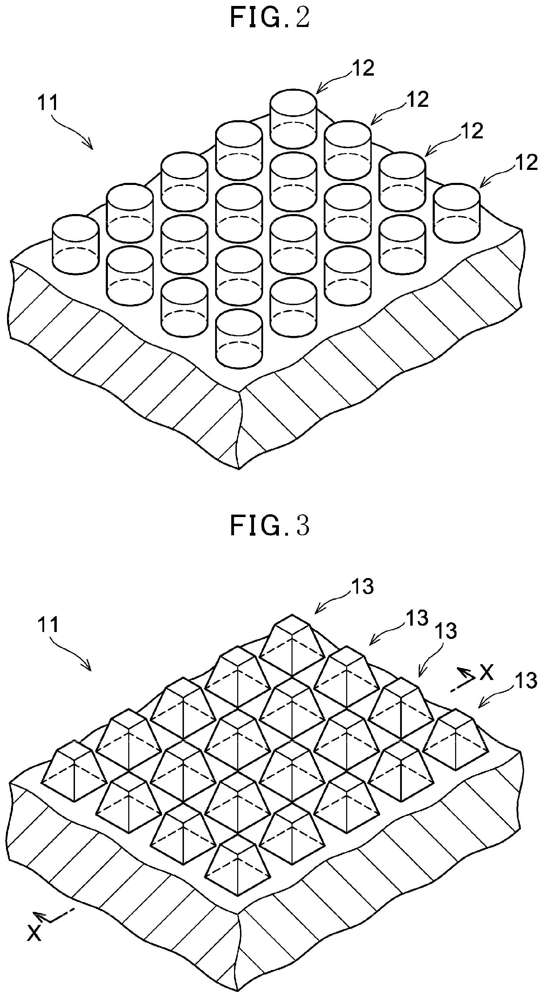

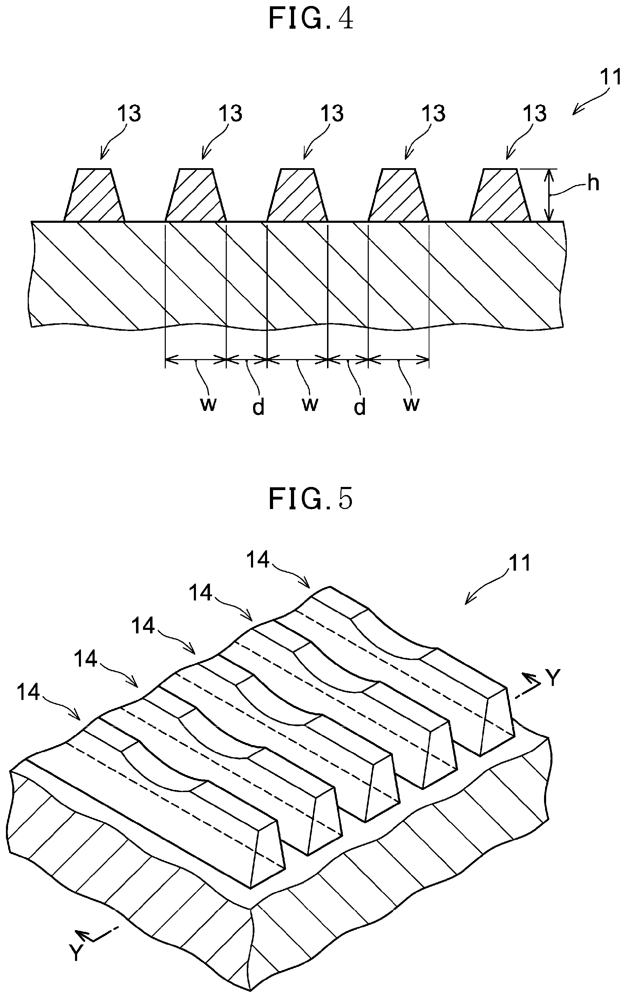

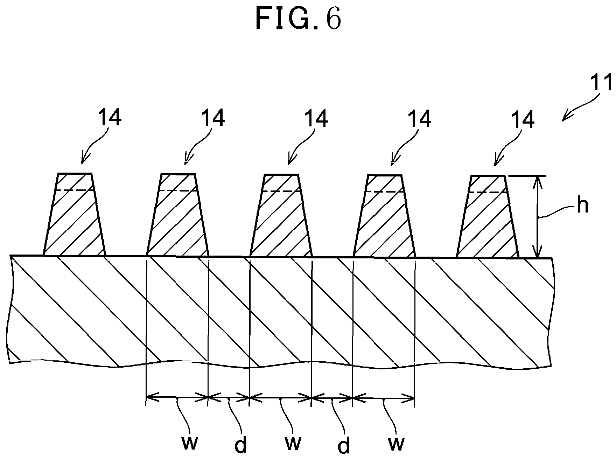

FIG. 2 shows a part of a minute protrusion-forming part in which cylindrical minute protrusions 12 are formed on an outer surface 11 of a sidewall. FIG. 3 shows a part of a minute protrusion-forming part in which quadrangular truncated conical shaped minute protrusions 13 are formed on an outer surface 11 of a sidewall. FIG. 4 is an X-X cross-sectional view of FIG. 3 when the minute protrusions are viewed in a direction perpendicular to a plane including a normal line erected on the outer surface of the sidewall. FIG. 4 shows a height h of each of the minute protrusions 13, a maximum width w of each of the minute protrusions 13, and an interval d between the minute protrusions 13. FIG. 5 shows a part of a minute protrusion-forming part in which rib shaped minute protrusions 14 are formed on an outer surface 11 of a sidewall. FIG. 6 is a Y-Y cross-sectional view of FIG. 5 when the minute protrusions are viewed in a direction perpendicular to a plane including a normal line erected on the outer surface of the sidewall. FIG. 6 shows a height h of each of the minute protrusions 14, a maximum width w of each of the minute protrusions 14, and an interval d between the minute protrusions 14.

Here, a "height" of a minute protrusion is the highest height among heights of minute protrusions that are measured along a normal line erected on an outer surface of a sidewall, a "maximum width" is the maximum width of widths of the minute protrusions on the outer surface of the sidewall that are measured in one direction in which the minute protrusions are aligned, and an "interval" refers to the smallest interval among intervals between minute protrusions on an outer surface of a sidewall that are measured in one direction in which the minute protrusions are aligned. Besides, all of the height and the maximum width of each of the minute protrusions and the interval between minute protrusions are measured in a state where the outer surface of the sidewall is developed on a plane.

The height of each minute protrusion at a tire maximum width position is preferably 0.03 mm or more or may be 0.05 mm or more or 0.10 mm or more. On the other hand, the height is preferably 0.50 mm or less or may be 0.45 mm or less or 0.40 mm or less. Moreover, the maximum width of each of the minute protrusions is preferably 0.03 mm or more or may be 0.05 mm or more or 0.10 mm or more. On the other hand, the maximum width is preferably 5.00 mm or less, or may be 3.00 mm or less, 1.00 mm or less, or 0.50 mm or less. Furthermore, the interval between minute protrusions is preferably 1.00 mm or less, or may be 0.70 mm or less or 0.50 mm or less. Besides, the interval between minute protrusions may be at least approximately half the maximum width or may be almost equal to the maximum width. Besides, an approximate value of a density of the minute protrusions (piece/cm$^2$) can be calculated from the above-described maximum width of, and the interval between, the minute protrusions. For example, in a case of Examples which will be described below, it is about 700 pieces/cm$^2$.

Twenty or more minute protrusions are preferably formed in at least one direction, and the minute protrusion-forming part preferably has an area of 10 mm$^2$ or more. This is because stress concentration on the outer surface of the sidewall is suppressed, so that these minute protrusions can contribute to improvement of crack resistance of the sidewall.

It is preferable that the heights of the minute protrusions are gradually increased from the tire maximum width position outward in the tire radial direction and are gradually increased from the tire maximum width position inward in the tire radial direction. This is because, relatively large strain occurs in the vicinity of the tire maximum width position of the sidewall, but, when the minute protrusions are formed such that, the nearer to the tire maximum width position the minute protrusion is, the more the height of the minute protrusion is decreased, non-uniformity of a rubber content in a tire circumferential direction at a position where large strain occurs is reduced, avoiding stress concentration in the vicinity of each minute protrusion, so that it is considered that such a configuration contributes to improvement of crack resistance of the sidewall.

Each minute protrusion preferably comprises an arcuate recessed part on a surface of the outermost part of the minute protrusion, like minute protrusions 14 shown in Fig. 5. This is because such a configuration can suppress air accumulation in the arcuate recessed part, so that occurrence of poor appearance of the minute protrusion can be suppressed.

<Rubber composition>

The rubber composition for a clinch apex and the rubber composition for a sidewall will be described below.

[Rubber composition for clinch apex]

Each component of the rubber composition for a clinch apex will be described below. The rubber composition constituting the clinch apex comprises a recovered carbon black.

<Rubber component>

The rubber composition constituting the clinch apex may comprise a rubber component comprising an isoprene-based rubber (IR-based rubber) and a butadiene rubber (BR). In this case, although the rubber component can comprise a rubber component other than an IR-based rubber and a BR, the rubber component may be one consisting of an IR-based rubber and a BR. An explanation of each rubber that can constitute the rubber component is as described below.

<<Isoprene-based rubber>>

Examples of the isoprene-based rubber include a natural rubber (NR), an isoprene rubber (IR), a refined NR, a modified NR, a modified IR, and the like. As the NR, for example, those common in the rubber industry can be used, such as SIR20, RSS#3, TSR20, SVR-L and the like. The IR is not particularly limited, and as the IR, for example, those common in the rubber industry can be used, such as IR2200 and the like. Examples of the refined NR include a deproteinized natural rubber (DPNR), an ultra pure natural rubber (UPNR), and the like. Examples of the modified NR include an epoxidized natural rubber (ENR), a hydrogenated natural rubber (HNR), a grafted natural rubber, and the like. Examples of the modified IR include an epoxidized isoprene rubber, a hydrogenated isoprene rubber, a grafted isoprene rubber, and the like. The isoprene-based rubbers may be used alone, or two or more thereof may be used in combination.

For example, a content of an IR-based rubber based on 100% by mass of the rubber component is greater than 15% by mass, preferably greater than 20% by mass, more preferably greater than 25% by mass, further preferably greater than 35% by mass, further preferably greater than 45% by mass. On the other hand, the content is, for example, 100% or less, preferably less than 90% by mass, more preferably less than 80% by mass. When the content is within the above-described ranges, processability in kneading rubbers tends to be improved.

(BR)

The BR is not particularly limited, and examples of the BR include those common in the tire industry, such as, for example, a BR having a high cis content, a BR containing a 1,2-syndiotactic polybutadiene crystal (SPB-containing BR), a butadiene rubber synthesized using a rare-earth element-based catalyst (a rare-earth-based BR), a tin-modified butadiene rubber modified by a thin compound (tin-modified BR), a modified butadiene rubber other than these BRs (modified BR), and the like. As a commercially available product of the BR, products from UBE Corporation, JSR Corporation, Asahi Kasei Corporation, Ltd., Zeon Corporation, etc. can be used. It is sufficient that the modified BR is a BR having a functional group interacting with a filler such as silica and the like. Examples of the modified BR include, for example, a terminal-modified BR obtained by modifying at least one terminal of a BR with a compound (a modifying agent) having the above-described functional group (terminal-modified BR having the above-described functional group at its terminal), a main chain modified BR whose main chain has the above-described functional group, a main chain terminal-modified BR having the above-described functional groups on its main chain and at its terminal (for example, a main chain terminal-modified BR whose main chain has the above-described functional group and at least one terminal of which is modified with the above-described modifying agent), a terminal-modified BR which is modified (coupled) with a polyfunctional compound having two or more epoxy groups in a molecule and into which a hydroxyl group or an epoxy group is introduced, and the like. Examples of the above-described functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group whose hydrogen atom is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable.

A cis amount (cis content) of a BR is preferably greater than 90% by mass, more preferably greater than 93% by mass, further preferably greater than 95% by mass, further preferably 97% by mass or more. The cis amount of the BR can be measured by infrared absorption spectrometry.

As the BR, for example, products from UBE Corporation, JSR Corporation, Asahi Kasei Corporation, Ltd., Zeon Corporation, etc. can be used. The BR may be used alone, or two or more thereof may be used in combination.

Moreover, a content of a BR based on 100% by mass of the rubber component is, for example, greater than 25% by mass, preferably greater than 35% by mass, more preferably greater than 45% by mass, further preferably 50% by mass or more. On the other hand, the content is, for example, less than 90% by mass, preferably less than 80% by mass, more preferably less than 70% by mass. When the content is within the above-described ranges, flex crack growth tends to be improved.

Moreover, a total content of an IR-based rubber and a BR based on 100% by mass of the rubber component is preferably greater than 80% by mass, more preferably greater than 90% by mass, further preferably greater than 95% by mass, or may be 100% by mass.

(Other rubbers)

Other usable rubbers other than the above-described rubbers are not particularly limited, and rubbers used in the tire field and the like can be used as such other rubbers. Examples of the other usable rubbers include, for example, diene-based rubbers such as a styrene-butadiene rubber (SBR), an acrylonitrile-butadiene rubber (NBR), a chloroprene rubber (CR), a styrene-isoprene-butadiene copolymer rubber (SIBR), and the like. These other rubbers may be used alone, or two or more thereof may be used in combination.

(SBR)

The styrene-butadiene rubber (SBR) is not particularly limited, examples of which include, for example, an unmodified emulsion-polymerized styrene-butadiene rubber (E-SBR), an unmodified solution-polymerized styrene-butadiene rubber (S-SBR), and modified SBRs obtained by modifying these SBRs, such as a modified emulsion-polymerized styrene-butadiene rubber (modified E-SBR) and a modified solution-polymerized styrene-butadiene rubber (modified S-SBR), and the like. Examples of the modified SBR include a modified SBR modified at its terminal and/or main chain, a modified SBR coupled with tin, a silicon compound, etc. (a modified SBR of condensate or having a branched structure, etc.), and the like. Moreover, types of the SBR include an oil-extended type whose flexibility is adjusted by addition of an extending oil and a non-oil-extended type to which no extending oil is added, any of which can be used. As such an SBR, for example, products from JSR Corporation, Asahi Chemicals Co., Ltd., Zeon Corporation, ZS Elastomer Co., Ltd., etc. can be used. The SBR may be used alone, or two or more thereof may be used in combination.

A styrene content of an SBR is preferably greater than 15% by mass, more preferably greater than 20% by mass, further preferably greater than 23% by mass. Moreover, the styrene content is preferably less than 40% by mass, more preferably less than 30% by mass, further preferably less than 25% by mass, from the viewpoint of fuel efficiency. Besides, the styrene content of the SBR is a value measured by the above-described measuring method.

A vinyl content (1,2-bond butadiene unit amount) of an SBR is preferably greater than 10% by mass, more preferably greater than 15% by mass, more preferably greater than 20% by mass. Moreover, the vinyl content is preferably less than 80% by mass, more preferably less than 50% by mass, further preferably less than 30% by mass. Besides, the vinyl content of the SBR is a value measured by the above-described measuring method.

A content of an SBR-based rubber based on 100% by mass of the rubber component is, for example, greater than 10% by mass, preferably greater than 20% by mass, more preferably greater than 40% by mass. On the other hand, the content is, for example, 100% by mass or less, preferably less than 90% by mass, more preferably less than 80% by mass.

(Rubber component synthesized from recycle-derived/biomass-derived raw material)

A monomer that is a raw material (monomer) of a synthetic rubber such as an SBR, a BR, and the like may be one derived from petroleum or one recycled from a rubber product such as a tire and the like or a non-rubber product such as polystyrene and the like. Examples of monomers obtained by recycle (recycled monomers) include, but not particularly limited to, a recycle-derived butadiene, a recycle-derived aromatic vinyl, and the like. Examples of the above-described butadiene include 1,2-butadiene and 1,3-butadiene. Examples of the above-described aromatic vinyl include, but not particularly limited to, styrene and the like. Among them, a recycle-derived butadiene (recycled butadiene) and/or a recycle-derived styrene (recycled styrene) are preferably used as raw materials.

A method of producing a recycled monomer is not particularly limited. Examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a raw material (monomer) of a synthetic rubber such as an SBR, a BR, and the like may be one derived from biomass. Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl include, but not particularly limited to, styrene and the like. Moreover, a method of producing a biomass monomer is not particularly limited, examples of which include, for example, a method by biological and/or chemical and/or physical conversion of an animal or a plant. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof. Examples of biomass sources for these monomers include sugar and wood, a plant residue after acquisition of a useful component, a plant-derived ethanol, a biomass naphtha, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10.

"pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}$C is constantly generated by cosmic rays causing nuclear reactions in the atmosphere. Therefore, decrease in $^{14}$C due to radioactive decay and generation of $^{14}$C due to nuclear reactions are balanced, and the amount of $^{14}$C has been constant in the atmosphere environment of the earth. Therefore, the $^{14}$C concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}$C is generally measured as follows. A $^{13}$C concentration ($^{13}$C/$^{12}$C) and a $^{14}$C concentration ($^{14}$C/$^{12}$C) are measured using an accelerator mass spectrometry based on a tandem accelerator. In the measurements, a $^{14}$C concentration in a circulating carbon in nature as of 1950 is adopted as the modern standard reference that becomes a reference for the $^{14}$C concentration. As a specific reference material, an oxalic acid standard provided by NIST (National Institute of Standard and Technology) is used. A specific radioactivity of carbon in this oxalic acid (radioactivity intensity of $^{14}$C per gram of carbon) is sorted for each carbon isotope, $^{13}$C is corrected to be a constant value, and a value corrected for attenuation correction from 1950 to the date of measurement is used as a standard $^{14}$C concentration value (100%). A ratio of this value and a value actually measured for a sample becomes a pMC value.

Thus, if a rubber is produced from a material derived from 100% biomass, the $^{14}$C concentration shows a value of approximately 110 pMC though there are regional differences and the like since, currently, it is often not equal to 100 under a normal condition. On the other hand, if this $^{14}$C concentration is measured for a chemical substance derived from a fossil fuel such as petroleum and the like, it shows about 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

<Filler>

The filler comprises a recovered carbon black (rCB). The filler can comprise any of usual carbon black, silica, and another filler for reinforcement used in the tire industry, besides recovered carbon black. Moreover, in a case where the filler comprises silica, the filler can further comprise a silane coupling agent. The filler preferably comprises a recovered carbon black and carbon black different from the recovered carbon black.

(Recovered carbon black)

In the present invention, a recovered carbon black refers to carbon black that is obtained by a pyrolysis process of a product comprising carbon black such as a used tire and the like, in which a ratio of a mass of ash (ash content), which is a component that does not combust, is 5% by mass or more when the product is subjected to oxidative combustion by heating in the air, using a thermal weight measurement method according to JIS K 6226-2:2003. The ash content of the recovered carbon black is preferably 7% by mass or more, more preferably 9% by mass or more, further preferably 11% by mass or more, further preferably 13% by mass or more. Moreover, the ash content is preferably less than 30% by mass, more preferably less than 27% by mass, further preferably less than 25% by mass.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process is one that usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black in one embodiment of the present invention also include carbon black treated so as to include a functional group on its surface.

An average primary particle size of a recovered carbon black is preferably 20 nm or more, more preferably 25 nm or more, further preferably 30 nm or more, particularly preferably 35 nm or more. When the average primary particle size of carbon black is within the above-described ranges, rubber molecules bound by carbon black are minimized, and it becomes easy for the rubber molecules to flexibly move. Accordingly, it is considered that, for an input, stress can be mitigated even by polymer molecule chains. On the other hand, the average primary particle size is preferably 90 nm or less, more preferably 75 nm or less, further preferably 60 nm or less. Besides, the average primary particle size of carbon black is measured by the above-described measuring method.

A nitrogen adsorption specific surface area ($N_2SA$) of a recovered carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint that a sufficient reinforcing property and a good abrasion resistance can be obtained. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoint of an excellent dispersibility and unlikeliness for heat generation. Besides, the $N_2SA$ of the recovered carbon black in the present specification is a value measured according to JIS K 6217-2:2017.

A content of a recovered carbon black is, for example, greater than 3 parts by mass, preferably greater than 5 parts by mass, more preferably greater than 6 parts by mass, further preferably greater than 7 parts by mass, based on 100 parts by mass of the rubber component, from the viewpoint of reinforcing property. On the other hand, the content of the recovered carbon black may be less than 50 parts by mass, preferably less than 40 parts by mass, more preferably less than 30 parts by mass, further preferably less than 20 parts by mass, further preferably less than 10 parts by mass, further preferably 8 parts by mass or less.

(Carbon black other than rCB)

Examples of carbon black other than the recovered carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. They may be used alone, or two or more thereof may be used in combination.

An average primary particle size of carbon black is preferably 20 nm or more, more preferably 25 nm or more, further preferably 30 nm or more, particularly preferably 35 nm or more. When the average primary particle size of carbon black is within the above-described ranges, rubber molecules bound by carbon black are minimized, and it becomes easy for the rubber molecules to flexibly move. Accordingly, it is considered that, for an input, stress can be mitigated even by polymer molecule chains. On the other hand, the average primary particle size is preferably 90 nm or less, more preferably 75 nm or less, further preferably 60 nm or less. Besides, the average primary particle size of carbon black is measured by the above-described measuring method.

A nitrogen adsorption specific surface area ($N_2SA$) of carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint that a sufficient reinforcing property and a good abrasion resistance can be obtained. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoint of an excellent dispersibility and unlikeliness for heat generation. Besides, the $N_2SA$ of carbon black in the present specification is a value measured according to JIS K 6217-2:2017.

A content of another carbon black other than a recovered carbon black when compounded is, for example, greater than 25 parts by mass, preferably greater than 35 parts by mass, more preferably greater than 45 parts by mass, further preferably 50 parts by mass or more, based on 100 parts by mass of the rubber component. On the other hand, it is preferably less than 90 parts by mass, more preferably less than 80 parts by mass, further preferably less than 70 parts by mass.

A total content of carbon black (a total of a content of a recovered carbon black and a content of carbon black other than the recovered carbon black) is preferably greater than 30 parts by mass, more preferably greater than 40 parts by mass, further preferably greater than 50 parts by mass, based on 100 parts by mass of the rubber component, from the viewpoint of reinforcing property. On the other hand, the total content is preferably less than 80 parts by mass, more preferably less than 75 parts by mass, further preferably less than 70 parts by mass, further preferably less than 65 parts by mass, further preferably less than 60 parts by mass, from the viewpoint of fuel efficiency. When the content of carbon black is within the above-described ranges, a sufficient reinforcing property and a good dispersion in a rubber are obtained, so that a sufficient rubber strength and a sufficient crack resistance tend to be obtained.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from a product comprising silica, for example, such as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2$/g, more preferably greater than 100 $m^2$/g, further preferably greater than 150 $m^2$/g, particularly preferably greater than 170 $m^2$/g. Moreover, an upper limit of the $N_2SA$ of silica is, but not particularly limited to, preferably less than 350 $m^2$/g, more preferably less than 250 $m^2$/g, further preferably less than 200 $m^2$/g. Besides, the $N_2SA$ of silica is a value measured by a BET method according to ASTM D3037-93.

(Content of silica)

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoint of the effects of the present invention. Moreover, the content is preferably less than 150 parts by mass, more preferably less than 100 parts by mass, further preferably less than 50 parts by mass, further preferably less than 30 parts by mass, from the viewpoints of dispersibility of silica and processability.

(Silane coupling agent)

In a case where silica is used as a filler, a rubber composition preferably further comprises a silane coupling agent. Examples of the silane coupling agent include, but not particularly limited to, for example, sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 2-triethoxysilylethyl-N, N-dimethylthiocarbamoyl tetrasulfide, 3-triethoxysilylpropyl methacrylate monosulfide, and the like; mercapto-based ones such as 3-mercaptopropyltrimethoxysilane, 2-mercaptoethyltriethoxysilane, NXT and NXT-Z100 manufactured by Momentive Performance Materials, and the like; vinyl-based ones such as vinyltriethoxysilane, vinyltrimethoxysilane, and the like; amino-based ones such as 3-aminopropyltriethoxysilane, 3-aminopropyltrimethoxysilane, and the like; glycidoxy-based ones such as γ-glycidoxypropyltriethoxysilane, γ-glycidoxypropyltrimethoxysilane, and the like; nitro-based ones such as 3-nitropropyltrimethoxysilane, 3-nitropropyltriethoxysilane, and the like; and chloro-based ones such as 3-chloropropyltrimethoxysilane, 3-chloropropyltriethoxysilane, and the like. As a commercially available product, products from Evonik Industries AG, Momentive Performance Materials, Shin-Etsu Chemical Co., Ltd., Tokyo Chemical Industry Co, Ltd., AZmax.co, Dow Corning Toray Co., Ltd., etc. can be used. These silane coupling agents may be used alone, or two or more thereof may be used in combination.

(Content of silane coupling agent)

A content of a silane coupling agent when compounded is preferably greater than 1 part by mass, more preferably greater than 3 parts by mass, further preferably greater than 5 parts by mass, further preferably greater than 7 parts by mass, based on 100 parts by mass of silica. On the other hand, the content is preferably less than 20 parts by mass, more preferably less than 18 parts by mass, further preferably less than 16 parts by mass, further preferably less than 14 parts by mass. When the content is within the above-described ranges, dispersibility of the silica tends to be improved.

(Other fillers)

Other fillers are not particularly limited, and materials known in the field of the tire industry can be used as other fillers. Examples of such other fillers include, for example, inorganic fillers such as calcium carbonate, talc, alumina, clay, aluminum hydroxide, aluminum oxide, mica, and the like. They may be used alone, or two or more thereof may be used in combination.

<Other compounding agents>

The rubber composition can appropriately comprise compounding agents conventionally and commonly used in the tire industry, for example, a plasticizing agent, processing aid, a vulcanized rubber particle, wax, stearic acid, zinc oxide, an antioxidant, a vulcanizing agent, a vulcanization accelerator, and the like, in addition to the rubber component and the filler.

(Plasticizing agent)

The plasticizing agent is a material giving a rubber component plasticity and includes both a plasticizing agent that is a liquid (in a liquid state) at normal temperature and a plasticizing agent that is solid at normal temperature. Examples of the plasticizing agent include resin, oil, a liquid polymer, an ester-based plasticizing agent, and the like. These plasticizing agents may be ones derived from petroleum, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

<<Oil>>

Oil is not particularly limited, and any of those commonly used in the tire industry can be appropriately used as oil, and examples of oil include, for example, a process oil, a vegetable oil, an animal oil, and the like. Examples of the process oil include a paraffinic process oil (mineral oil), a naphthenic process oil, an aromatic process oil, and the like. Specific examples of the process oil include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, a process oil having a low content of a polycyclic aromatic compound (PCA) can also be used. Examples of the process oil having a low content of a PCA include MES, TDAE, heavy naphthenic oil, and the like. Moreover, from the viewpoint of a life cycle assessment, one obtained by refining a waste oil after use for a rubber mixing machine or an engine or waste cooking oil used in a cooking facility may also be used. Among them, an aromatic process oil is preferable, and a TDAE oil is more preferable. As the oil, for example, those manufactured and sold by H&R Group, JXTG Nippon Oil & Energy Corporation, Idemitsu Kosan Co., Ltd., Sankyo Yuka Kogyo K. K., etc., and the like can be used. Oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at normal temperature. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature.

Whether the rubber composition comprises the above-described acylglycerol can be confirmed by, but not particularly limited to, $^1$H-NMR measurement. For example, a heavy chloroform in which a rubber composition containing triacylglycerol is immersed at normal temperature for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of ±0.10 ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

A content of oil based on 100 parts by mass of the rubber component is preferably greater than 1 part by mass, more preferably greater than 3 parts by mass, further preferably greater than 5 parts by mass. Moreover, the content is preferably less than 20 parts by mass, more preferably less than 15 parts by mass, further preferably less than 10 parts by mass. Besides, the content of oil shall also include an amount of oil contained as an extending oil in a rubber component or oil contained in another component such as sulfur and the like.

<<Liquid polymer>>

A liquid polymer is a polymer in a liquid state at normal temperature, examples of which include, for example, a liquid diene-based polymer, and the like. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000. A Mn of the liquid polymer is a value measured with a gel permeation chromatography (GPC) and calculated in terms of polystyrene. As a liquid diene-based polymer, for example, products from Sartomer, Kuraray Co., Ltd., etc. can be used. The liquid polymer may be used alone, or two or more thereof may be used in combination.

(Resin)

Resin may be used in combination with the rubber composition relating to the present embodiment. The resin component that can be used in the present embodiment is not particularly limited, and any resin commonly used in the tire industry can be used, and examples of such resin include, for example, adhesive resins such as a C9-based resin, a C5-based resin, a C5/C9-based resin, an aromatic vinyl-based resin, a dicyclopentadiene-based resin, a terpene-based resin, a rosin-based resin, a phenol-based resin, and the like. These resins may be used alone, or two or more thereof may be used in combination.

A "C9-based resin" refers to resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like.

A "C5-based resin" refers to resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, pentane, isopentane, neopentane, pentene, pentadiene, and the like.

A "C5/C9-based resin" refers to resin obtained by copolymerizing the C5 fraction and the C9 fraction and may be one obtained by hydrogenating or modifying it. As the C5/C9-based resin, for example, those commercially available from Tosoh Corporation, Zibo Luhua Hongjin New Material Group Co., Ltd, etc. can be used.

<<Dicyclopentadiene-based resin>>

A "dicyclopentadiene-based resin" refers to a resin comprising dicyclopentadiene (DCPD) as a monomer component having the largest content and may be one obtained by hydrogenating or modifying it. Examples of the dicyclopentadiene-based resin include, for example, a DCPD/C9 resin obtained by copolymerizing dicyclopentadiene with the C9 fraction, and the like, and the DCPD/C9 resin is preferable. As the DCPD resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A coumarone-based resin refers to a resin comprising coumarone as a monomer component and may be one obtained by hydrogenating or modifying it. Examples of the coumarone resin include, for example, a coumarone-indene resin comprising coumarone and indene as monomer components, a coumarone-indene-styrene resin comprising coumarone, indene, and styrene as monomer components, and the like.

<<Indene-based resin>>

An indene-based resin refers to a resin comprising indene as a monomer component and may be one obtained by hydrogenating or modifying it. Examples of the indene resin include, for example, a coumarone-indene resin comprising coumarone and indene as monomer components, a coumarone-indene-styrene resin comprising coumarone, indene, and styrene as monomer components, and the like.

<<Terpene-based resin>>

A terpene-based resin refers to a resin comprising a terpene compound such as $\alpha$-pinene, $\beta$-pinene, limonene, dipentene, and the like as a monomer component having the largest content, and may be one obtained by hydrogenating or modifying it. Specific examples of the terpene-based resin include, for example, a polyterpene resin comprising only one or more of the terpene compounds as monomer components, an aromatic-modified terpene resin comprising the terpene compound and an aromatic compound as monomer components, a terpene phenolic resin comprising the terpene compound and a phenol compound as monomer components, and the like. Examples of the aromatic compound used as a monomer component for the aromatic-modified terpene resin include, for example, styrene, $\alpha$-methylstyrene, vinyltoluene, divinyltoluene, and the like. Examples of the phenol-based compound used as a monomer component for the terpene phenolic resin include, for example, phenol, bisphenol A, cresol, xylenol, and the like.

<<Rosin-based resin>>

A rosin-based resin refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying it by hydrogenation, disproportionation, dimerization, esterification, etc., and the like.

<<Phenol-based resin>>

A phenol-based resin refers to a resin comprising a phenolic compound such as phenol, cresol, and the like as a monomer component having the largest content. Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A content of resin when compounded based on 100 parts by mass of the rubber component is preferably greater than 2 parts by mass, more preferably greater than 3 parts by mass, further preferably greater than 4 parts by mass. On the other hand, the content is preferably less than 20 parts by mass, more preferably less than 15 parts by mass, further preferably less than 10 parts by mass.

<<Ester-based plasticizing agent>>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha'$-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

(Vulcanized rubber particle)

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be an unmodified vulcanized rubber particle or a modified vulcanized rubber particle.

As a commercially available product of a vulcanized rubber, for example, products manufactured by Lehigh Technologies, Muraoka Rubber Reclaiming Co., Ltd. etc. can be used.

(Processing aid)

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Wax)

Wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a specially selected wax thereof, and the like. Among them, a paraffin wax is preferable. As wax, for example, those manufactured and sold by Ouchi Shinko Chemical Industry Co., Nippon Seiro Co., Ltd., PARAMELT, etc. can be used. Wax may be used alone, or two or more thereof may be used in combination.
A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

(Stearic acid)

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

(Zinc oxide)

A content of zinc oxide when compounded based on 100 parts by mass of the rubber component is preferably greater than 0.5 parts by mass, more preferably greater than 0.7 parts by mass, further preferably greater than 1 part by mass, from the viewpoint of processability. On the other hand, the content is preferably 10 parts by mass or less, more preferably less than 7 parts by mass, further preferably 5 parts by mass or less, from the viewpoint of abrasion resistance.

(Vulcanizing agent)

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.
Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.
A content of a vulcanizing agent when compounded based on 100 parts by mass of the rubber component is preferably greater than 0.4 parts by mass, more preferably greater than 0.5 parts by mass, further preferably greater than 1.0 parts by mass, further preferably greater than 1.5 parts by mass. On the other hand, the content is preferably less than 6.0 parts by mass, more preferably 5.0 parts by mass or less, further preferably less than 4.0 parts by mass. When the content of the vulcanizing agent is within the above-described ranges, an appropriate reinforcing effect tends to be obtained. Besides, in a case where the vulcanizing agent includes a component other than sulfur like an oil-processing sulfur and the like, the content of the vulcanizing agent means a content of a sulfur component itself.

(Vulcanization accelerator)

A vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiuram-based vulcanization accelerator, and the guanidine-based vulcanization accelerator are preferable, and the sulfenamide-based vulcanization accelerator is more preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of a vulcanization accelerator based on 100 parts by mass of the rubber component is preferably greater than 0.3 parts by mass, more preferably greater than 0.4 parts by mass, further preferably greater than 0.5 part by mass. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be able to be secured.

[Rubber composition for sidewall]

Each component of a rubber composition for sidewall will be described.

(Rubber component)

Descriptions of the rubber component are as follows and are as described in the explanation for the rubber composition for clinch apex. The rubber component may comprise a rubber selected from an IR-based rubber and a BR and can comprise a rubber component other than an IR-based rubber and a BR. Moreover, the rubber component may consist of a rubber selected from an IR-based rubber and a BR.

<<Content of IR-based rubber>>

Although descriptions of the rubber component are as described in the column for the rubber composition for clinch apex, a content of an IR-based rubber based on 100% by mass of the rubber component is, for example, greater than 15% by mass, preferably greater than 25% by mass, more preferably greater than 35% by mass, further preferably 40% by mass or more, further preferably 45% by mass or more. On the other hand, the content is, for example, 100% by mass or less, preferably less than 90% by mass, more preferably less than 80% by mass. When the content is within the above-described ranges, processability in kneading rubbers tends to be improved.

<<Content of BR>>

A content of a BR based on 100% by mass of the rubber component is, for example, greater than 30% by mass, preferably greater than 40% by mass, more preferably greater than 50% by mass, further preferably 55% by mass or more, further preferably 60% by mass or more. On the other hand, the content is, for example, less than 90% by mass, preferably less than 80% by mass, more preferably less than 70% by mass. When the content is within the above-described ranges, flex crack growth tends to be improved.

Moreover, a total content of an IR-based rubber and a BR based on 100% by mass of the rubber component is preferably greater than 80% by mass, more preferably greater than 90% by mass, further preferably greater than 95% by mass or may be 100% by mass.

(Filler)

The filler can comprise carbon black (including a recovered carbon black), silica, and another filler other than carbon black and silica. In a case where the filler comprises silica, the filler can further comprise a silane coupling agent. Descriptions of each component that can constitute the filler are as described in the column for the rubber composition for clinch apex. The filler preferably comprises carbon black.

<Carbon black>

The explanation made for the rubber composition for clinch apex can similarly apply to carbon black (including a recovered carbon black).

<<Content>>

A total content of carbon black comprising a recovered carbon black when compounded is, for example, greater than 30 parts by mass, preferably greater than 40 parts by mass, more preferably 50 parts by mass or more, further preferably 60 parts by mass or more, based on 100 parts by mass of the rubber component. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack resistance tend to be obtained.

(Other compounding agents)

The explanation made for the rubber composition for clinch apex can similarly apply to matters other than the matters described above.

<Other rubber members constituting tire>

In the present specification, the tire can comprise other rubber members other than the above-described rubber members. Such other rubber members are not particularly limited, and a variety of rubber members commonly used for a tire can be used.

In the present specification, various materials each comprising a carbon atom (for example, a rubber, oil, resin, a vulcanization accelerator, an antioxidant, a surfactant, and the like) may be derived from carbon dioxide in the atmosphere. As a method of obtaining compounds relating to the present embodiment from carbon dioxide, carbon dioxide may be directly converted, or methane obtained through a methanation step for synthesizing methane from carbon dioxide may be converted.

<Application>

In the present specification, the tire can be appropriately used as a pneumatic tire, although the tire may be a pneumatic tire or a non-pneumatic tire. Moreover, in the present specification, the tire can be used for various applications, such as a tire for a passenger car, a heavy-duty tire for a truck/bus and the like, a motorcycle tire, a high-performance tire, and the like.

<Producing method>

The tire relating to the present embodiment can be produced by a known method.

(Production of rubber composition)

Each of the above-described rubber compositions can be produced by a known method. For example, they can be produced by kneading the respective above-described components with a rubber kneading apparatus such as an open roll, a sealed type kneader (a Banbury mixer, a kneader, etc.), and the like. A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C to 170°C for 3 to 10 minutes in the base kneading step and kneading at 50°C to 110°C for 1 to 5 minutes in the final kneading step.

(Production of tire)

Each rubber composition obtained as described above is extruded into a desired shape of each of tire members at an unvulcanized stage, respectively, whereby an unvulcanized clinch apex and an unvulcanized sidewall can be produced. The clinch apex and the sidewall thus obtained are molded together with other tire members on a tire forming machine by a usual method, whereby an unvulcanized tire can be produced for the tire relating to the present embodiment. The tire can be obtained by heating and pressurizing (vulcanizing) this unvulcanized tire in a vulcanizing machine. Examples of a vulcanization condition include, but not particularly limited to, for example, a method of vulcanizing at 150 to 200°C for 5 to 30 minutes.

EXAMPLES

Hereinafter, examples considered to be preferable in implementing the present invention (Examples) will be described, though the scope of the present invention is not limited to only these Examples. Results, which are calculated based on evaluation methods described below considering a rubber composition and a tire obtained in accordance with each Table using various chemicals described below, are shown as indexes in a lower part of each Table.

<Materials>

Materials used in Examples and Comparative examples are collectively shown below.

Natural rubber: SVR-L
BR: BR150B (manufactured by Ube Industries, Ltd., unmodified high-cis BR, vinyl content: 1 mol%, cis content: 97 mol%, Mw: 440000)
Carbon black (CB) 1: SHOW BLACK N550 (manufactured by Cabot Japan K.K., $N_2SA$: 42 $m^2/g$, ash content: less than 1% by mass)
Carbon Black (CB) 2: SHOW BLACK N220 (manufactured by Cabot Japan K.K., $N_2SA$: 114 $m^2/g$, ash content: less than 1% by mass)
Recovered carbon black (rCB): Carbon black obtained by a pyrolysis process of a tire (ash content: 17% by mass)
Antioxidant: Nocrac 6C (manufactured by Ouchi Shinko Chemical Industry Co., Ltd. N-(1,3-dimethylbutyl)-N'-phenyl-p-phenylenediamine)
Stearic acid: Bead stearic acid "CAMELLIA" (manufactured by NOF CORPORATION)
Zinc oxide: Zinc oxide No. 2 (manufactured by Mitsui Mining & Smelting Co., Ltd.)
Oil: PS-32 (manufactured by Idemitsu Kosan Co., Ltd., mineral oil)
Sulfur: HK-200-5 (manufactured by Hosoi Chemical Industry Co., Ltd., powdered sulfur, oil content: 5% by mass)
Vulcanization accelerator 1: Nocceler CZ (manufactured by Ouchi Shinko Chemical Industry Co., Ltd., N-cyclohexyl-2-benzothiazolylsulfenamide)
Vulcanization accelerator 2: Nocceler NS (manufactured by Ouchi Shinko Chemical Industry Co., Ltd., N-tert-butyl-2-benzothiazyl sulfenamide)

<Rubber composition for clinch apex>

According to the compounding formulations shown in Tables 2 and 3, using a 1.7 L closed Banbury mixer, chemicals other than sulfur and a vulcanization accelerator are kneaded at a discharge temperature at 150°C for 5 minutes. Next, the sulfur and vulcanization accelerator are added to the obtained kneaded product, and the mixture is kneaded for 4 minutes using an open roll until the temperature reaches 100°C, to obtain an unvulcanized rubber composition for a clinch apex.

<Rubber composition for sidewall>

According to the compounding formulations shown in Tables 2 and 3, using a 1.7 L closed Banbury mixer, chemicals other than sulfur and a vulcanization accelerator are kneaded for 5 minutes until a temperature reaches a discharge temperature at 150°C to obtain a kneaded product. Next, using a twin-screw open roll, the sulfur and vulcanization accelerator are added to the kneaded product, and the mixture is kneaded for 4 minutes until the temperature reaches 100°C to obtain an unvulcanized rubber composition for a sidewall.

<Tire>

According to the descriptions of Tables 2 and 3, the unvulcanized rubber composition for a clinch apex and the unvulcanized rubber composition for a sidewall are extruded into a shape of a clinch apex and a shape of a sidewall, respectively, and further, attached together with other members to produce an unvulcanized tire, and the unvulcanized tire is press-vulcanized at 170°C for 12 minutes, thereby producing each test tire (size: 215/60R16, thickness of sidewall: 5.0 mm).

Moreover, during the press vulcanization, minute protrusions on an outer surface of a sidewall are formed using a mold equipped with a side plate where marks for formation of the minute protrusions are engraved on a surface that is opposite to a minute protrusion-forming part. Shapes of a minute protrusion A and a minute protrusion B are as follows. Besides, a "height h, in mm" is a height of a minute protrusion at a tire maximum width position, a "height h1, in mm" is a height of a minute protrusion at a position on an outermost side in a tire radial direction, and a "height h2, in mm" is a height of a minute protrusion at a position on an innermost side in the tire radial direction. In a case where a value of h1 is greater than a value of h, the heights of the minute protrusions are gradually increased from the tire maximum width position outward in the tire radial direction, and in a case where a value of h2 is greater than a value of h, the heights of the minute protrusions are gradually increased from the tire maximum width position inward in the tire radial direction.

Table 1

| Minute protrusion | A | B |
|---|---|---|
| Shape | Quadrangular truncated cone | Quadrangular truncated cone |
| Height h (mm) | 0.3 | 0.3 |
| Height h1 (mm) | 0.3 | 1.5 |
| Height h2 (mm) | 0.3 | 1.5 |
| Maximum width w (mm) | 0.2 | 0.2 |
| Interval d (mm) | 0.3 | 0.3 |
| Area of formation part (mm$^2$) | 1800 | 1800 |
| Density (Number/cm$^2$) | 700 | 700 |

<Evaluation>

Results from evaluations of respective test tires by evaluation methods described below are described in the corresponding columns in each of Tables 2 and 3 described below.

<Fuel efficiency index>

Rolling resistance of each test tire is measured using a rolling resistance tester when the test tire is made to run under a condition of an internal pressure of 230 kPa, a load of 3.43 kN, and at a speed of 80 km/h, and the reciprocal number of the rolling resistance is indicated as an index with the reference Comparative example (Comparative example 3) being as 100. The results show that the larger the index is, the smaller the rolling resistance is and the more excellent the fuel efficiency is.

<Crack resistance index>

Each test tire is rim-assembled to a standardized rim and filled with air at a standardized air pressure. With reference to an air pressure-load capacity correspondence table in Jatma Year Book, a maximum load capacity corresponding to this air pressure is applied to the test tire. Using a drum-type tire tester, the test tire is made to run at a speed of 80 km/h on the drum. A running distance at a point of time at which damage that can be visually confirmed from appearance occurs is calculated. Results are indicated as indexes with a running distance in the reference Comparative example (Comparative example 3) being as 100. The results show that the larger the index is, the more excellent the crack resistance is.

An overall performance index is defined as a sum of a fuel efficiency index and a crack resistance index.

Table 2

| | Example | | | | | | | |
|---|---|---|---|---|---|---|---|---|
| | 1 | 2 | 3 | 4 | 5 | 6 | 7 | 8 |
| Compounding for clinch apex (part by mass) | | | | | | | | |
| Natural rubber | 50 | 50 | 50 | 50 | 50 | 50 | 50 | 50 |
| BR | 50 | 50 | 50 | 50 | 50 | 50 | 50 | 50 |
| CB1 | - | - | - | - | - | 60 | - | - |
| CB2 | 57 | 57 | 47 | 57 | 47 | - | 57 | 57 |

(continued)

|  | Example | | | | | | | |
|---|---|---|---|---|---|---|---|---|
|  | 1 | 2 | 3 | 4 | 5 | 6 | 7 | 8 |
| **Compounding for clinch apex (part by mass)** | | | | | | | | |
| rCB | 7.8 | 7.8 | 7.8 | 7.8 | 7.8 | 8 | 7.8 | 7.8 |
| Antioxidant | 3.4 | 3.4 | 3.4 | 3.4 | 3.4 | 3.0 | 3.4 | 3.4 |
| Stearic acid | 3.5 | 3.5 | 3.5 | 3.5 | 3.5 | 3.0 | 3.5 | 3.5 |
| Zinc oxide | 3.5 | 3.5 | 3.5 | 3.5 | 3.5 | 1.7 | 3.5 | 3.5 |
| Oil | 8.0 | 8.0 | 8.0 | 8.0 | 8.0 | 16.4 | 8.0 | 8.0 |
| Sulfur | 2.6 | 2.6 | 2.6 | 2.6 | 2.6 | 2.2 | 2.6 | 2.6 |
| Vulcanization accelerator 1 | 2.6 | 2.6 | 2.6 | 2.6 | 2.6 | 3.4 | 2.6 | 2.6 |
| **Compounding for sidewall (part by mass)** | | | | | | | | |
| Natural rubber | 45 | 45 | 45 | 40 | 40 | 45 | 45 | 45 |
| BR | 55 | 55 | 55 | 60 | 60 | 55 | 55 | 55 |
| CB1 | 37 | 37 | 37 | 23 | 23 | 37 | 37 | 37 |
| CB2 | - | - | - | 14 | 14 | - | - | - |
| Antioxidant | 3.4 | 3.4 | 3.4 | 3.0 | 3.0 | 3.4 | 3.4 | 3.4 |
| Stearic acid | 2.5 | 2.5 | 2.5 | 2.5 | 2.5 | 2.5 | 2.5 | 2.5 |
| Zinc oxide | 4.0 | 4.0 | 4.0 | 4.0 | 4.0 | 4.0 | 4.0 | 4.0 |
| Oil | 4.0 | 4.0 | 4.0 | 4.0 | 4.0 | 4.0 | 4.0 | 4.0 |
| Sulfur | 2.3 | 2.3 | 2.3 | 2.3 | 2.3 | 2.3 | 2.3 | 2.3 |

|  | Example | | | | | | | |
|---|---|---|---|---|---|---|---|---|
|  | 1 | 2 | 3 | 4 | 5 | 6 | 7 | 8 |
| **Compounding for sidewall (part by mass)** | | | | | | | | |
| Vulcanization accelerator 2 | 0.8 | 0.8 | 0.8 | 0.8 | 0.8 | 0.8 | 0.8 | 0.8 |
| **Tire** | | | | | | | | |
| 70°C tan $\delta_C$ | 0.10 | 0.10 | 0.07 | 0.10 | 0.07 | 0.20 | 0.10 | 0.10 |
| Length of contact portion L (mm) | 8 | 15 | 8 | 8 | 20 | 8 | 8 | 8 |
| 70°CE*$_S$ (MPa) | 2.0 | 2.0 | 2.0 | 6.0 | 6.0 | 2.0 | 2.0 | 2.0 |
| T×70°C tan $\delta_C$ | 0.50 | 0.50 | 0.35 | 0.50 | 0.35 | 1.00 | 0.50 | 0.50 |
| W×L/70°C tan $\delta_C$ | 2960 | 5550 | 4229 | 2960 | 10571 | 1480 | 2960 | 2960 |
| Tire minute protrusion | None | None | None | None | None | None | A | B |
| Fuel efficiency index | 120 | 120 | 127 | 133 | 142 | 114 | 120 | 120 |
| Crack resistance index | 100 | 110 | 100 | 100 | 115 | 110 | 110 | 110 |
| Overall performance index | 220 | 230 | 227 | 233 | 257 | 224 | 230 | 230 |

Table 3

|  | Comparative example | | | |
|---|---|---|---|---|
|  | 1 | 2 | 3 | 4 |
| **Compounding for clinch apex (part by mass)** | | | | |
| Natural rubber | 50 | 50 | 50 | 50 |
| BR | 50 | 50 | 50 | 50 |
| CB1 | 80 | 60 | 80 | 80 |
| CB2 | - | - | - | - |
| rCB | 8.0 | 8.0 | 8.0 | 8.0 |
| Antioxidant | 3.0 | 3.0 | 3.0 | 3.0 |
| Stearic acid | 3.0 | 3.0 | 3.0 | 3.0 |

(continued)

| | Comparative example | | | |
|---|---|---|---|---|
| | 1 | 2 | 3 | 4 |
| Compounding for clinch apex (part by mass) | | | | |
| Zinc oxide | 1.7 | 1.7 | 1.7 | 1.7 |
| Oil | 16.4 | 16.4 | 16.4 | 16.4 |
| Sulfur | 2.2 | 2.2 | 2.2 | 2.2 |
| Vulcanization accelerator 1 | 3.4 | 3.4 | 3.4 | 3.4 |
| Compounding for sidewall (part by mass) | | | | |
| Natural rubber | 45 | 45 | 45 | 45 |
| BR | 55 | 55 | 55 | 55 |
| CB1 | 17 | 17 | 17 | 37 |
| CB2 | - | - | - | - |
| Antioxidant | 3.4 | 3.4 | 3.4 | 3.4 |
| Stearic acid | 2.5 | 2.5 | 2.5 | 2.5 |
| Zinc oxide | 4.0 | 4.0 | 4.0 | 4.0 |
| Oil | 4.0 | 4.0 | 4.0 | 4.0 |
| Sulfur | 2.3 | 2.3 | 2.3 | 2.3 |

| | Comparative example | | | |
|---|---|---|---|---|
| | 1 | 2 | 3 | 4 |
| Compounding formulation for sidewall (part by mass) | | | | |
| Vulcanization accelerator 2 | 0.8 | 0.8 | 0.8 | 0.8 |
| Tire | | | | |
| 70°C tan $\delta_C$ | 0.28 | 0.20 | 0.28 | 0.28 |
| Length of contact portion L (mm) | 3 | 3 | 8 | 3 |
| 70°CE*$_S$ (MPa) | 1.9 | 1.9 | 1.9 | 2.0 |
| T×70°C tan $\delta_C$ | 1.40 | 1.00 | 1.40 | 1.40 |
| W×L/70°C tan $\delta_C$ | 182 | 255 | 486 | 396 |
| Tire minute protrusion | None | None | None | None |
| Fuel efficiency index | 100 | 107 | 100 | 109 |
| Crack resistance index | 70 | 70 | 100 | 70 |
| Overall performance index | 170 | 177 | 200 | 179 |

REFERENCE SIGNS LIST

| | |
|---|---|
| 1 | Tire |
| 2 | Sidewall |
| 3 | Clinch apex |
| CL | Tire equatorial plane |
| L | Length of contact portion of sidewall and clinch apex |
| R | Rim |
| T | Thickness of sidewall |
| 11 | Sidewall outer surface |
| 12 | Minute protrusion |
| 13 | Minute protrusion |
| 14 | Minute protrusion |
| w | Maximum width of minute protrusion |
| d | Interval between minute protrusions |

h        Height of minute protrusion

**Claims**

1.   A tire comprising a pair of sidewalls located in side parts, and a pair of clinch apexes that are located on inner sides of the sidewalls in a radial direction and in contact with a rim,

   wherein a rubber composition constituting the clinch apex comprises a recovered carbon black, and has a loss tangent at 70°C, 70°C tan $\delta c$, of less than 0.25,
   wherein a length of a contact portion of the clinch apex and the sidewall on a tire meridian cross section including a tire rotation axis is 5 mm or more and 30 mm or less, preferably 8 mm or more and 30 mm or less, more preferably 8 mm or more and 25 mm or less, further preferably 8 mm or more and 20 mm or less, further preferably 10 mm or more and 25 mm or less, and
   wherein a complex elastic modulus at 70°C, in MPa, of a rubber composition constituting the sidewall, $70°CE^*_S$, is 2.0 or more.

2.   The tire of claim 1, wherein the length of the contact portion of the clinch apex and the sidewall is 10 mm or more and 20 mm or less, preferably 12 mm or more and 20 mm or less.

3.   The tire of claim 1 or 2, wherein 70°C tan $\delta c$ is less than 0.20, preferably less than 0.15, more preferably 0.10 or less, further preferably less than 0.10, further preferably 0.07 or less.

4.   The tire of any one of claims 1 to 3, wherein $70°CE^*_S$ is 4.5 or more, preferably 5.0 or more, more preferably 6.0 or more.

5.   The tire of any one of claims 1 to 4, wherein 70°C tan $\delta c$ is 0.10 or less, preferably 0.07 or less, and $70°CE^*_S$ is 5.0 or more, preferably 6.0 or more.

6.   The tire of any one of claims 1 to 5, wherein a content of the recovered carbon black is less than 20 parts by mass, preferably less than 10 parts by mass, more preferably 8 parts by mass or less, based on 100 parts by mass of the rubber component.

7.   The tire of any one of claims 1 to 6,

   wherein the rubber composition constituting the clinch apex comprises the rubber component comprising greater than 20% by mass, preferably greater than 25% by mass, more preferably greater than 35% by mass, further preferably greater than 45% by mass, further preferably 50% by mass or more, of an isoprene-based rubber based on 100% by mass of the rubber component, and
   wherein, in a case where a content of the isoprene-based rubber in the rubber component is less than 100% by mass, the rubber component comprises at least one of a butadiene rubber and a styrene-butadiene rubber, a content of the butadiene rubber being preferably greater than 25% by mass, more preferably greater than 35% by mass, further preferably greater than 45% by mass, further preferably 50% by mass or more, and a content of the styrene-butadiene rubber being preferably greater than 10% by mass, more preferably greater than 20% by mass, further preferably greater than 40% by mass.

8.   The tire of any one of claims 1 to 7, wherein the rubber composition constituting the sidewall comprises greater than 40% by mass, preferably greater than 50% by mass, more preferably 55% by mass or more, further preferably 60% by mass or more, of a butadiene rubber based on 100% by mass of the rubber component.

9.   The tire of any one of claims 1 to 8, wherein the sidewall has a minute protrusion-forming part in which a plurality of minute protrusions are formed on an outer surface.

10.  The tire of claim 9, wherein a shape of each of the minute protrusions is a columnar, conical, or rib shape.

11.  The tire of claim 9 or 10,

   wherein a height of each of the minute protrusions is 0.03 mm or more, preferably 0.05 mm or more, more preferably 0.10 mm or more, and is 0.50 mm or less, preferably 0.45 mm or less, more preferably 0.40 mm or less,

wherein twenty or more minute protrusions are formed at intervals of 0.50 mm or less in at least one direction, and wherein the minute protrusion-forming part has an area of 10 mm$^2$ or more.

12. The tire of any one of claims 9 to 11, wherein a maximum width of each of the minute protrusions is 0.03 mm or more, preferably 0.05 mm or more, more preferably 0.10 mm or more, and is 5.0 mm or less, preferably 3.00 mm or less, more preferably 1.00 mm or less, and further preferably 0.50 mm or less.

13. The tire of any one of claims 9 to 12, wherein heights of the minute protrusions are gradually increased from a tire maximum width position outward in a tire radial direction and are gradually increased from the tire maximum width position inward in the tire radial direction.

14. The tire of any one of claims 1 to 13, wherein T and 70°C tan $\delta$c satisfy relationship of the inequality (1), preferably the right side in the inequality (1) being 0.75, more preferably 0.70, further preferably 0.65, further preferably 0.60, further preferably 0.55,

$$(1)\ T \times 70°C\ \tan \delta_C < 0.80$$

where T represents a thickness, in mm, of the sidewall.

15. The tire of any one of claims 1 to 14, wherein W, L, and 70°C tan $\delta$c satisfy relationship of the inequality (2), preferably the right side in the inequality (2) being 5200, more preferably 5400, further preferably 5600, further preferably 6000, further preferably 10000,

$$(2)\ W \times L / 70°C\ \tan \delta_C > 5000$$

where W represents a content, in parts by mass, of carbon black in the rubber composition for the sidewall, and L represents the length, in mm, of the contact portion of the clinch apex and the sidewall.

# FIG. 1

# FIG.2

# FIG.3

# FIG. 4

# FIG. 5

# FIG.6

# EUROPEAN SEARCH REPORT

**Application Number**

EP 25 17 8209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 166 353 A1 (SUMITOMO RUBBER IND [JP]) 19 April 2023 (2023-04-19) * paragraphs [0037], [0063], [0064], [0070], [0108]; claims 1-9; figure 1; tables 1-1,1-2 * ----- | 1-15 | INV. B60C1/00 B60C13/02 |
| Y | EP 4 177 082 A1 (SUMITOMO RUBBER IND [JP]) 10 May 2023 (2023-05-10) * paragraphs [0034], [0035]; claims 1-19; figure 1; tables 1-9 * ----- | 1-15 | |
| Y | EP 4 368 412 A1 (SUMITOMO RUBBER IND [JP]) 15 May 2024 (2024-05-15) * paragraphs [0087] - [0089]; claims 1-14; figures 1-11; tables 1-4 * ----- | 9-13 | |

**TECHNICAL FIELDS SEARCHED (IPC)**

B60C

The present search report has been drawn up for all claims

| Place of search | Date of completion of the search | Examiner |
|---|---|---|
| Munich | 2 October 2025 | Carneiro, Joaquim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 17 8209

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2025

| Patent document cited in search report | | Publication date | Patent family member(s) | | Publication date |
|---|---|---|---|---|---|
| EP 4166353 | A1 | 19-04-2023 | CN | 115991896 A | 21-04-2023 |
| | | | EP | 4166353 A1 | 19-04-2023 |
| EP 4177082 | A1 | 10-05-2023 | CN | 116056915 A | 02-05-2023 |
| | | | EP | 4177082 A1 | 10-05-2023 |
| | | | JP | 6819026 B1 | 27-01-2021 |
| | | | JP | 7531785 B2 | 13-08-2024 |
| | | | JP | 2022029186 A | 17-02-2022 |
| | | | JP | 2022029399 A | 17-02-2022 |
| | | | US | 2023286330 A1 | 14-09-2023 |
| | | | WO | 2022030285 A1 | 10-02-2022 |
| EP 4368412 | A1 | 15-05-2024 | EP | 4368412 A1 | 15-05-2024 |
| | | | JP | 2024070773 A | 23-05-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023060806 A
- EP 3427975 A
- JP 6856781 B
- EP 3173251 A
- JP 2009002594 A

### Non-patent literature cited in the description

- *JIS K 6226-2*, 2003
- *JIS K 6239-2*, 2017
- *JIS K 6217-2*, 2017
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193
- *Akita Prefectural University Web Journal B/2019*, vol. 6, 216-222